# EUROPÄISCHE PATENTSCHRIFT

(11) **EP 2 659 322 B1**
(45) Veröffentlichungstag und Bekanntmachung des Hinweises auf die Patenterteilung: **30.05.2018**
(21) Anmeldenummer: 11805529.2
(22) Anmeldetag: 23.12.2011
(51) Int. Cl.: G05D 1/02, A01D 34/00

(54) **VERFAHREN ZUR BEARBEITUNG EINER FLÄCHE MITTELS EINES ROBOTER-FAHRZEUGS**
METHOD FOR PROCESSING A SURFACE BY MEANS OF A ROBOTIC VEHICLE
PROCÉDÉ DE TRAITEMENT D'UNE SURFACE AU MOYEN D'UN VÉHICULE ROBOTISÉ

(30) Priorität: 24.01.2011 DE 102011003064; 29.12.2010 DE 102010064329
(43) Veröffentlichungstag der Anmeldung: 06.11.2013
(73) Patentinhaber: Robert Bosch GmbH, 70442 Stuttgart (DE)
(72) Erfinder: BIBER, Peter, 72119 Poltringen (DE); ALBERT, Amos, 71229 Leonberg (DE)
(86) Internationale Anmeldenummer: PCT/EP2011/073993
(87) Internationale Veröffentlichungsnummer: WO 2012/089679

(56) Entgegenhaltungen:
- EP-A1- 1 557 730
- EP-A1- 2 269 433
- EP-A2- 1 898 289
- US-A- 5 696 675
- Acar E U et al.: "Morse Decompositions for Coverage Tasks", The International Journal of Robotics Research , Bd. 21, Nr. 4 30. April 2002 (2002-04-30), Seiten 331-344, XP002672247, Gefunden im Internet: URL:http://www.cs.cmu.edu/~biorobotics/pap ers/A028807.pdf [gefunden am 2012-03-22]

## Beschreibung

### Stand der Technik

Die Erfindung betrifft ein Verfahren zur Bearbeitung einer Fläche mittels eines Roboter-Fahrzeugs.

Ein derartiges Verfahren ist aus der US 5,696,675 bekannt. Bei dem bekannten Verfahren werden beispielsweise bei einem Reinigungsfahrzeug innerhalb einer zu reinigenden Fläche Einzelsegmente mit rechteckförmiger Form gebildet, die bestimmte Kriterien hinsichtlich der Möglichkeit der Reinigung der Einzelsegmente mit Reinigungsvorrichtungen des Roboterfahrzeugs erfüllen. Diese Einzelsegmente werden entweder durch eine entsprechende manuelle Eingabe vorgegeben oder aber auf sonstige, in der genannten Schrift nicht näher erläuterten Art und Weise, generiert.

Bei einem aus der EP 1 557 730 A1 bekannten Verfahren wird bei einer zu bearbeitenden Bodenfläche die Außenkontur erfasst und die Bodenfläche anschließend in einzelne, nacheinander zu bearbeitende Teilsegmente unterteilt. Die Form der Teilsegmente wird dabei unter Berücksichtigung der Außenkontur der gesamten Bodenfläche bestimmt.

Die EP 1 898 289 A2 offenbart, wie zu bearbeitende Teilflächen abgearbeitet werden können und beschreibt verschiedene Fahrstrategien eines Flächenbearbeitungsgeräts, insbesondere zwischen den zu bearbeitenden Teilflächen. Hierzu werden sogenannte Markierungselemente unterschiedlicher Kategorien verwendet.

Aus dem Stand der Technik sind darüber hinaus bereits eine Vielzahl von Verfahren zur Bearbeitung einer Fläche mittels eines Roboter-Fahrzeugs bekannt, wobei die Fläche als Rasenfläche ausgebildet ist und mittels eines autonom gesteuerten Rasenmähers bearbeitet bzw. gemäht wird. Problematisch hierbei ist insbesondere die Erkennung von Außengrenzen der zu bearbeitenden (Rasen-) Fläche. Daher ist es aus dem Stand der Technik bereits bekannt, z.B. Einfassungsdrähte zu verwenden, mit denen die zu bearbeitende Fläche an ihrer Außengrenze umfasst ist, wobei der Einfassungsdraht sensorisch von dem Roboter-Fahrzeug erkannt werden kann. Aus der DE 10 2007 023 157 A1 der Anmelderin ist darüber hinaus ein Verfahren bekannt, bei der die Außengrenze mittels Sensoren erkannt werden kann, wobei die Sensoren wenigstens einen Infrarotsensor umfassen, der die Intensität einer von dem Untergrund reflektierten Infrarotstrahlung erfasst. In Kenntnis der Außengrenze der zu bearbeitenden Fläche ist es weiterhin bekannt, dass eine Steuerung eine Umrisskarte der zu bearbeitenden Fläche erstellen kann.

Hinsichtlich einer Bearbeitungsstrategie einer zu bearbeitenden Fläche ist es bekannt, eine Fläche nach dem Zufallsprinzip zu bearbeiten. Dies bedeutet, dass das Roboter-Fahrzeug innerhalb der zu bearbeitenden Fläche sich geradlinig mit einem zufälligen Winkel gegenüber der Umgebung bewegt, bis es an eine Umgebungsgrenze stößt. Dort wird nach einem Wendevorgang ein neuer Zufallswinkel generiert. Nachteilig dabei ist, dass die Bearbeitung einer Fläche mit derartigen, zufällig gewählten Kursen recht lange dauert, bis tatsächlich die zu bearbeitende Fläche vollständig bearbeitet wurde. Insbesondere werden auch Flächen mehrfach bearbeitet bzw. überfahren. Im Idealfall wird eine zu bearbeitende Fläche mittels parallel zueinander angeordneten Streckenabschnitten bearbeitet, wobei die Streckenabschnitte jeweils an der äußeren Begrenzung der Fläche enden und mit 180°-Kurven verbunden sind. Eine derartige Bearbeitungsstrategie ermöglicht in kürzester Zeit eine vollflächige Bearbeitung der Fläche, die darüber hinaus, z.B. im Fall des Mähens einer Rasenfläche, auch optisch Vorteile bietet.

Aus dem Stand der Technik sind darüber hinaus Vorrichtungen bzw. Verfahren zur hochgenauen Lokalisierung eines Roboter-Fahrzeugs bekannt. Derartige Lokalisierungssysteme dienen dazu, das Roboter-Fahrzeug innerhalb der zu bearbeitenden Fläche hochgenau navigieren zu können. Problematisch dabei ist, dass der erforderliche Aufwand des Lokalisierungssystems mit dessen Genauigkeit zunimmt. Insbesondere im privaten Anwendungsbereich, z.B. zum Mähen von Rasenflächen, bedeutet dies einen relativ hohen Kostenaufwand.

### Offenbarung der Erfindung

Ausgehend von dem dargestellten Stand der Technik liegt der Erfindung die Aufgabe zugrunde, ein Verfahren zur Bearbeitung einer Fläche mittels eines Roboter-Fahrzeugs aufzuzeigen, das eine Strategie aufweist, bei der eine zu bearbeitende Fläche derart auf- bzw. eingeteilt wird, dass diese möglichst schnell und effektiv bearbeitet werden kann. Diese Aufgabe wird bei einem Verfahren zur Bearbeitung einer Fläche mittels eines Roboter-Fahrzeugs mit den Merkmalen des Anspruchs 1 gelöst. Das erfindungsgemäße Verfahren schlägt dabei im Wesentlichen eine Bearbeitungsstrategie vor, bei der, in Kenntnis der zu bearbeitenden Fläche, die zu bearbeitende Fläche zunächst - wie an sich bekannt - in Einzelsegmente unterteilt wird, anschließend die Einzelsegmente hinsichtlich einer Eigenschaftsklasse klassifiziert werden, und zuletzt die Einzelsegmente nacheinander angefahren und bearbeitet werden, wobei je nach Eigenschaftsklasse des entsprechenden Einzelsegments dieses mit einer spezifischen Bearbeitungsstrategie bearbeitet wird. Dabei ist es erfindungsgemäß vorgesehen, dass vor der eigentlichen Bearbeitung der Fläche mittels des Roboter-Fahrzeugs die Steuerung die Anzahl, Größe und den Umriss der Einzelsegmente zunächst durch eine Vielzahl von zufälligen Einteilungen der zu bearbeitenden Fläche in vorläufige Einzelsegmente vornimmt, und dass diejenigen vorläufigen Einzelsegmente als endgültige Einzelsegmente generiert werden, bei der die Summe der bevorzugten Eigenschaftsklassen möglichst groß ist, da sich bei diesen Einzelsegmenten die Flächen relativ einfach bzw. effektiv bearbeiten lassen.

Vorteilhafte Weiterbildungen des erfindungsgemäßen Verfahrens zur Bearbeitung einer Fläche mittels eines Roboter-Fahrzeugs sind in den Unteransprüchen angegeben.

Zur Ermittlung der Außengrenze der zu bearbeitenden Fläche wird erfindungsgemäß, dass die Daten bezüglich der zu bearbeitenden Fläche durch Abfahren des Roboter-Fahrzeugs entlang einer Außengrenze ermittelt werden.

Hierbei können sämtliche, aus dem Stand der Technik bekannten Verfahren zur Erkennung von Außengrenzen einer zu bearbeitenden Fläche eingesetzt bzw. verwendet werden.

In einer weiteren Ausgestaltung ist es vorgesehen, dass bei der Einteilung in Einzelsegmente Ergebnisse aus vorangegangenen Bearbeitungen herangezogen werden. Dies kann beispielsweise dadurch geschehen, dass in Kenntnis der zu bearbeitenden Fläche ein Vergleich von in einem Speicher der Steuerung abgelegten bearbeitenden Flächen erfolgt. Wird dabei festgestellt, dass die aktuell zu bearbeitende Fläche mit einer bereits bearbeiteten Fläche übereinstimmt, so wird daraus geschlossen, dass die beiden Flächen identisch sind. Sollte sich ferner bei der vorausgegangenen Bearbeitung herausgestellt haben, dass beispielsweise innerhalb der zu bearbeitenden Fläche ein Hindernis, z.B. ein Baum, steht, so kann dies für die aktuelle Einteilung in Einzelsegmente herangezogen werden, indem z.B. der Bereich, in dem das Hindernis steht, mittels einer Zufallstrategie bearbeitet wird. Ferner können die während der aktuellen Bearbeitung neu auftretende Ereignisse genutzt werden, um die beschriebene Vorgehensweise erneut anzuwenden, um so on-line eine optimale Restbearbeitungsstrategie für die noch nicht bearbeitete Restfläche zu generieren.

Die Bearbeitungsstrategien der Einzelsegmente bestehen insbesondere in einem Abfahren eines vordefinierten Bewegungsweges oder eines zufälligen Bewegungsweges. Der vordefinierte Bewegungsweg besteht dabei vorzugsweise aus parallel zueinander angeordneten Bahnabschnitten, und der zufällige Bewegungsweg durch geradlinige Bahnabschnitte, die durch an den Grenzen des Einzelsegments erzeugte Wenden mit Zufallswinkel verbunden sind.

Das Verfahren findet bevorzugt Verwendung bei einem autonom fahrenden Rasenmäher. Ein derartiger, autonom fahrender Rasenmäher ermöglicht bei relativ kostengünstigen Navigationsmitteln eine effektive Bearbeitung einer Rasenfläche.

Diese zeigt in:
- Fig. 1: einen autonom fahrenden Rasenmäher in einer vereinfachten Draufsicht,
- Fig. 2: ein Programmablaufdiagramm zur Erläuterung des erfindungsgemäßen Verfahrens zur Bearbeitung einer Fläche,
- Fig. 3 und Fig. 4: Draufsichten auf jeweils eine identisch ausgebildete, zu bearbeitende Fläche, mit unterschiedlichen Einzelsegmenten und
- Fig. 5 und Fig. 6: vereinfachte Draufsichten auf unterschiedliche, zu bearbeitende Einzelsegmente unter Verwendung unterschiedlicher Bearbeitungsstrategien.

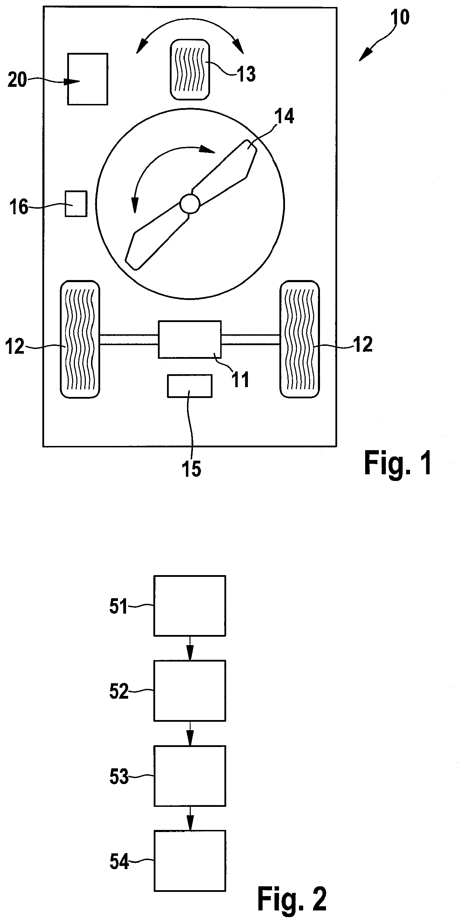

In der Fig. 1 ist in einer vereinfachten Draufsicht ein Roboter-Fahrzeug in Form eines selbstfahrenden Rasenmähers 10 dargestellt. Der Rasenmäher 10 weist zwei, über einen Antriebsmotor 11 angetriebene Hinterräder 12 sowie ein lenkbares Vorderrad 13 auf.

In Abänderung des dargestellten Ausführungsbeispiels ist es auch denkbar, dass der Rasenmäher 10 zwei unabhängig voneinander angetriebene Antriebsräder aufweist, so dass über unterschiedliche Antriebsdrehzahlen die Fahrtrichtung der Rasenmähers 10 beeinflusst wird.

Ferner ist ein Mähwerk 14 erkennbar, mit dem eine Rasenfläche gemäht werden kann. Der Rasenmäher 10 umfasst ferner eine Steuerung 15 sowie wenigstens ein Sensorelement 16, das zur Erfassung einer Außengrenze 101 einer zu bearbeitenden Fläche 100 dient. Das Sensorelement 16 kann je nach spezifischer Auslegung zur Erkennung der Außengrenze 101 unterschiedlich ausgebildet sein. So ist es beispielsweise denkbar, dass das Sensorelement 16 die Außengrenze 101 der zu bearbeitenden Fläche 100 dadurch erkennt, dass ein an der Außengrenze 101 angeordnetes bzw. vergrabenes Metallkabel oder ein stromdurchflossener Leiter detektiert wird. Das Sensorelement 16 kann beispielsweise aber auch als Infrarotsensor ausgebildet sein, mit dem anhand der Reflektion des Untergrunds die zu bearbeitende Fläche 100, und somit auch deren Außengrenze 101, erkannt wird. Die genaue Position des Sensorelements 16 ist in der Fig. 1lediglich beispielhaft gewählt. Es können auch andere Anordnungen, beispielsweise an der Front des Rasenmähers 10, oder aber mehrere Sensorelemente 16 vorgesehen sein.

Der Rasenmäher 10 umfasst weiterhin Navigations- bzw. Lokalisationsmittel 20, mit denen der Rasenmäher 10 seine Position, insbesondere innerhalb der zu bearbeitenden Fläche 100, mit einer Genauigkeit zwischen 10cm und 2m ermitteln kann. Derartige Navigations- bzw. Lokalisationsmittel 20 können beispielsweise Sensoren zur Erfassung der Raddrehzahlen, Inertialsensoren sein bzw. ein GPSumfassen.

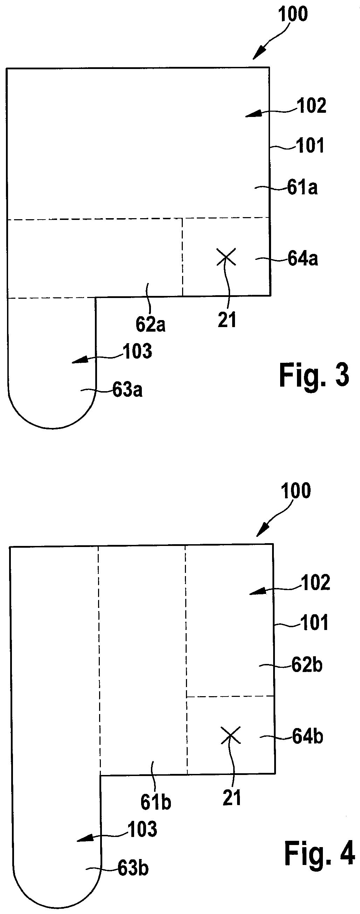

In den Fig. 3. und 4 ist jeweils die zu bearbeitende, identische Fläche 100 beispielhaft dargestellt. Im Bereich der Außengrenze 101 der Fläche 100 kann, wie beschrieben, beispielsweise eine von dem Rasenmäher 10 angeordnete metallische Leitung verlegt sein. Die Fläche 100 besteht im Wesentlichen aus einem in etwa rechteckförmigen Bereich 102 und einem, an der langen Seite des rechteckförmigen Bereichs 102 sich anschließenden, rechteckig gerundeten Bereich 103, wobei die Fläche 100 auch Hindernisse, z.B. Bäume, aufweisen kann.

In der Fig. 2 ist der von der Steuerung 15 des Rasenmähers 10 vorgesehene Programmablauf zur Bearbeitung der Fläche 100 mit seinen wesentlichen Schritten vereinfacht dargestellt. Hierbei wird in einem ersten Programmschritt 51 von der Steuerung 15 eine Umrisskarte der zu bearbeitenden Fläche 100 erstellt. Dieses Erstellen der Umrisskarte der Fläche 100 erfolgt dadurch, dass der Rasenmäher 10 entlang der Außengrenze 101 der zu bearbeitenden Fläche 100 fährt. Dabei wird fortlaufend die Position des Rasenmähers 100 mittels der Navigationsmittel 20 erfasst. Sobald der Rasenmäher 10 wieder seine Startposition erreicht, was mittels der Navigationsmittel 20 erkannt wird, schließt die Steuerung 15 des Rasenmähers 10 darauf, dass die zu bearbeitende Fläche 100 vollständig umrundet bzw. erfasst wurde.

In einem sich an den ersten Programmschritt 51 anschließenden zweiten Programmschritt 51 wird anschließend die zu bearbeitende Fläche 100 mittels eines Algorithmus in Einzelsegmente 61a bis 64a bzw. 61b bis 64b unterteilt. Dieses Unterteilen in Einzelsegmente 61a bis 64a bzw. 61b bis 64b erfolgt mittels der Steuerung 15 durch zufällige Generierung bzw. Aufteilung der zu bearbeitenden Fläche 100 in n Segmente. Im beschriebenen Ausführungsbeispiel gemäß den Fig. 3 und 4 wird die zu bearbeitende Fläche 100 in vier Einzelsegmente 61a bis 64a bzw. 61b bis 64b unterteilt. Die Anzahl n der Segmente kann jedoch auch größer oder niedriger sein. Bevorzugt ist jedoch eine relativ geringe Anzahl n von Segmenten vorteilhaft, damit die einzelnen Segmente jeweils relativ große Flächen aufweisen können, die sich, wie nachfolgend beschrieben, zumindest teilweise einfacher bzw. rationeller bearbeiten lassen. Die Anzahl n der Segmente kann beispielsweise der Steuerung 15 dadurch vorgegeben sein, dass, in Kenntnis der Umrisskarte der Fläche 100 und somit auch deren Größe, ein Wertebereich für n vorgegeben wird, so dass sich typischerweise bestimmte Mindestgrößen für die Segmente einstellen. Auch können zunächst mehrere Segmentierungen mit unterschiedlicher Anzahl n von Segmenten generiert werden, wobei diejenige Segmentierung bevorzugt wird, die größere Einzelflächen generiert.

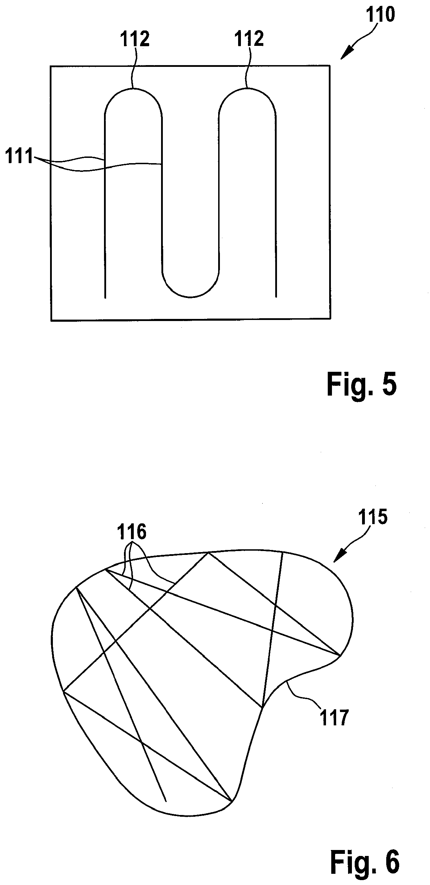

Wesentlich ist, dass jedem Einzelsegment 61a bis 64a bzw. 61b bis 64b eine Eigenschaftsklasse A oder B zugeordnet wird. Hierbei wird unter einer Eigenschaftsklasse A ein Einzelsegment 61a bis 64a bzw. 61b bis 64b verstanden, das sich relativ einfach bearbeiten lässt. Unter einer sich relativ einfach bearbeitenden Fläche wird wiederum eine Fläche verstanden, deren Form eine geometrische Grundform aufweist, insbesondere relativ rechteckige und damit konvex ausgebildet ist. Eine derartige Fläche 110, die beispielhaft in der Fig. 5 dargestellt ist, lässt sich insbesondere durch parallel zueinander angeordnete Bahnen 111 bearbeiten, die über 180°-Wenden 112 miteinander verbunden sind. Demgegenüber wird unter einer Eigenschaftsklasse B eine Fläche verstanden, die sich am effektivsten mittels einer Zufallsstrategie bearbeiten lässt. Hierzu wird beispielhaft auf die Fig. 6 verwiesen, bei der die Fläche 115 dadurch bearbeitet wird, dass der Rasenmäher 10 innerhalb der Fläche 115 sich auf geradlinig ausgebildeten Bahnen 116 bewegt, wobei, sobald der Rasenmäher 10 an die Außengrenze 117 stößt, der Rasenmäher 10 um einen Zufallswinkel oder geeignet heuristisch ermittelten Winkel gedreht bzw. gewendet wird.

In den Fig. 3 und 4 mit jeweils identisch ausgebildeter zu bearbeitender Fläche 100 weist diese jeweils zwei Einzelsegmente 61a, 61b und 62a, 62b der Eigenschaftsklasse A sowie jeweils zwei Einzelsegmente 63a, 63b und 64a, 64b der Eigenschaftsklasse B auf. Bei dem Einzelsegment 64a, 64b ist ferner der Fall erkennbar, dass sich in dem Einzelsegment 64a, 64b ein Hindernis 21, z.B. ein Baum, befindet. Diesen Baum bzw. dieses Hindernis 21 wurde von dem Rasenmäher 10 bei der Generierung der Umrisskarte der zu bearbeitenden Fläche 100 zwar nicht erkannt bzw. erfasst, dessen Standort ist jedoch aufgrund eines zeitlich bereits stattgefundenen Bearbeitungsvorgangs bekannt und wird daher bei der aktuellen Bearbeitungsstrategie der Fläche 100 mit berücksichtigt.

Somit kommt es lediglich bei einer erstmaligen Bearbeitung einer Fläche 100 zu einer falschen Klassifizierung eines Segments 61a bis 64a; 61b bis 64b, die jedoch durch Berücksichtigung der neuen Erkenntnis und einer widerholten Anwendung des Algorithmus behoben wird. Insofern lässt sich das beschriebene Verfahren iterativ (on-line) verwenden und liefert bei einem erneuten Durchlauf eine geeignete Reststrategie. Das gleiche gilt auch für die initial unbekannten Aussparungsbereiche, welche sich durch das Begrenzungskabel markieren lassen (zum Beispiel Blumenbeet, Gartenteich), und die bei der Fahrt entlang der Außengrenze 101 unerkannt bleiben.

Die Bearbeitungsstrategie für die Fläche 100 wird dadurch generiert, dass die Steuerung 15 eine Aufsummierung der Eigenschaftsklassen A und B der Einzelsegmente 61a bis 64a bzw. 61b bis 64b vornimmt. Es wird diejenige Bearbeitungsstrategie weiterverfolgt, die eine größere Anzahl von Eigenschaftsklassen A beinhaltet, die sich diese Segmente einfacher bzw. effektiver bearbeiten lassen.

Bei dem in den Fig. 3 und 4 dargestellten Ausführungsbeispiel wurde die zu bearbeitende Fläche 100 jeweils in zwei Einzelsegmente 61a, 61b, 62a, 62b der Eigenschaftsklasse A und zwei Einzelsegmente 63a, 63b und 64a, 64b der Eigenschaftsklasse B unterteilt. In diesem Fall könnte eine Bearbeitungsstrategie des Rasenmähers 10 entweder durch eine Unterteilung gemäß der Fig. 3 oder gemäß der Fig. 4 erfolgen, da beide Aufteilungen jeweils zwei Segmente der der Eigenschaftsklasse A aufweisen. Es kann jedoch auch vorgesehen sein, dass zusätzliche Kriterien zur Auswahl der Bearbeitungsstrategie herangezogen werden. Diese können beispielsweise in einer Berücksichtigung der Größe der zu bearbeitenden Einzelsegmente 61a bis 64a bzw. 61b bis 64b bestehen, insbesondere der Segmente mit der Eigenschaftsklasse A bzw. B. So erkennt man beispielsweise anhand der Fig. 3, dass das Einzelsegment 61a der Eigenschaftsklasse A etwas größer ist als das Einzelsegment 61b gemäß der Fig. 4. Weiterhin ist das der Eigenschaftsklasse B zugehörige Einzelsegment 63a deutlich kleiner als das entsprechende Einzelsegment 63b in der Fig.4. Insofern erscheint eine Bearbeitungsstrategie, bei der die zu bearbeitende Fläche 100 entsprechend der Fig. 3 unterteilt ist, sinnvoller zu sein.

Die oben beschriebene Einklassifizierung der Einzelsegmente 61a bis 64a bzw. 61b bis 64b in die Eigenschaftsklassen A, B erfolgt in einem dritten Programmschritt 53. An den dritten Programmschritt 53 schließt sich entsprechend der Fig. 2 ein vierter Programmschritt 54 an, bei dem die Einzelsegmente 61a bis 64a bzw. 61b bis 64b entsprechend der tatsächlich ausgewählten Bearbeitungsstrategie nacheinander abgearbeitet bzw. bearbeitet werden. Hierbei kann es auch vorgesehen sein, dass die Reihenfolge der Abarbeitung derart ist, dass zwischen den Einzelsegmenten 61a bis 64a bzw. 61 b bis 64b die jeweils geringsten bzw. kürzesten Verbindungswege vorhanden sind.

Das soweit beschriebene Verfahren zur Bearbeitung einer Fläche 100 kann in vielfältiger Art und Weise abgewandelt bzw. modifiziert werden, ohne vom Erfindungsgedanken abzuweichen. Insbesondere ist die Erfindung auch nicht auf den Einsatz eines Rasenmähers 10 beschränkt.

## Patentansprüche

1. Verfahren zur Bearbeitung einer Fläche (100) mittels eines Roboter-Fahrzeugs (10), wobei das Roboter-Fahrzeug (10) eine Steuerung (15) aufweist, in der Daten bezüglich des Umrisses der zu bearbeitenden Fläche (100) abgelegt sind, wobei Lokalisierungsmittel (20) vorhanden sind, die die Position des Roboter-Fahrzeugs (10), insbesondere in Bezug zu der zu bearbeitenden Fläche (100) ermitteln, und wobei das Verfahren folgende Schritte umfasst:
- Einteilen der zu bearbeitenden Fläche (100) mittels eines Algorithmus der Steuerung (15) in Einzelsegmente (61a bis 64a; 61b bis 64b), wobei zunächst mehrere Segmentierungen mit unterschiedlicher Anzahl von Einzelsegmenten (61a bis 64a; 61b bis 64b) generiert werden
- Klassifizierung jedes Einzelsegments (61a bis 64a; 61b bis 64b) in eine von zwei Eigenschaftsklassen (A, B) wobei sich die Eigenschaftsklassen (A, B) in der Einfachheit bzw. Effektivität der Bearbeitung
unterscheiden
- Aufsummierung der Eigenschaftsklassen (A, B) der Einzelsegmente (61a bis 64a; 61b bis 64b) für jede Segmentierung durch die Steuerung (15)
- Weiterverfolgung einer Bearbeitungsstrategie, die eine größere Anzahl von Einzelsegmenten (61a bis 64a; 61b bis 64b) mit einer Eigenschaftsklasse (A, B) aufweist, die sich einfacher bzw. effektiver bearbeiten lässt
- Nacheinander Anfahren und Bearbeiten der Einzelsegmente (61a bis 64a; 61b bis 64b), wobei jedes Einzelsegment (61a bis 64a; 61b bis 64b) mit einer seiner Eigenschaftsklasse (A, B) entsprechenden Bearbeitungsstrategie bearbeitet wird.

2. Verfahren nach Anspruch 1,
**dadurch gekennzeichnet,**
**dass** die Daten bezüglich der zu bearbeitenden Fläche (100) durch Abfahren des Roboter-Fahrzeugs (10) entlang einer Außengrenze (101) der zu bearbeitenden Fläche (100) ermittelt werden.

3. Verfahren nach Anspruch 1,
**dadurch gekennzeichnet,**
**dass** bei der Einteilung in Einzelsegmente (61a bis 64a; 61b bis 64b) Ergebnisse aus vorangegangenen Bearbeitungen oder während einer aktuellen Bearbeitung herangezogen werden.

4. Verfahren nach einem der Ansprüche 1 bis 3,
**dadurch gekennzeichnet,**
**dass** die Bearbeitungsstrategie des Einzelsegments (61a bis 64a; 61b bis 64b) in einem Abfahren eines vordefinierten Bewegungsweges oder eines zufälligen bzw. heuristisch motivierten Bewegungsweges besteht.

5. Verfahren nach Anspruch 4,
**dadurch gekennzeichnet,**
**dass** der vordefinierte Bewegungsweg aus zueinander parallel angeordneten Bahnabschnitten (111) besteht und bei einem Einzelsegment (61a bis 64a; 61b bis 64b) mit einer Eigenschaftsklasse (A) durchgeführt wird, das eine geometrische Grundform aufweist, und dass der zufällige Bewegungsweg durch geradlinige Bahnabschnitte (116) gekennzeichnet ist, die durch an den Grenzen (117) des Einzelsegments (61a bis 64a; 61b bis 64b) erzeugte Wenden mit Zufallswinkel verbunden sind, wobei der zufällige Bewegungsweg bei einem Einzelsegment (61a bis 64a; 61b bis 64b) mit einer Eigenschaftsklasse (B) durchgeführt wird, das sich am effektivsten mittel seiner Zufallsstrategie bearbeiten lässt.

6. Verfahren nach einem der Ansprüche 1 bis 5,
**dadurch gekennzeichnet,**
**dass** diejenige Segmentierung bevorzugt wird, die größere Einzelflächen der Einzelsegmente (61a bis 64a; 61b bis 64b) generiert.

7. Verfahren nach einem der Ansprüche 1 bis 6,
**dadurch gekennzeichnet,**
**dass** die Anzahl der Einzelsegmente (61a bis 64a; 61b bis 64b) für die Segmentierung in Abhängigkeit der Größe der Fläche (100) ausgewählt wird, derart, dass sich eine Mindestgröße für ein Einzelsegment (61a bis 64a; 61b bis 64b) einstellt.

8. Verwendung eines Verfahrens nach einem der Ansprüche 1 bis 7 bei einem autonom fahrenden Rasenmäher (10).

## Claims

1. Method for treating an area (100) by means of a robotic vehicle (10), wherein the robotic vehicle (10) has a controller (15) which stores data relating to the outline of the area (100) to be treated, wherein
there are localization means (20) which determine the position of the robotic vehicle (10), in particular in relation to the area (100) to be treated, and wherein the method comprises the following steps of:
- dividing the area (100) to be treated into individual segments (61a to 64a; 61b to 64b) by means of an algorithm of the controller (15), wherein a plurality of segmentations with a different number of individual segments (61a to 64a; 61b to 64b) are first of all generated,
- classifying each individual segment (61a to 64a; 61b to 64b) in one of two property classes (A, B), wherein the property classes (A, B) differ in terms of the simplicity or effectiveness of the treatment,
- adding up the property classes (A, B) of the individual segments (61a to 64a; 61b to 64b) for each segmentation by means of the controller (15),
- pursuing a treatment strategy having a larger number of individual segments (61a to 64a; 61b to 64b) with a property class (A, B) which can be treated in a simpler or more effective manner,
- successively approaching and treating the individual segments (61a to 64a; 61b to 64b), wherein each individual segment (61a to 64a; 61b to 64b) is treated with a treatment strategy corresponding to its property class (A, B).

2. Method according to Claim 1,
**characterized**
**in that** the data relating to the area (100) to be treated are determined by virtue of the robotic vehicle (10) moving along an outer boundary (101) of the area (100) to be treated.

3. Method according to Claim 1,
**characterized**
**in that** results from preceding treatments or during a current treatment are used during the division into individual segments (61a to 64a; 61b to 64b).

4. Method according to one of Claims 1 to 3,
**characterized**
**in that** the treatment strategy for the individual segment (61a to 64a; 61b to 64b) involves moving along a predefined movement path or a random or heuristically motivated movement path.

5. Method according to Claim 4,
**characterized**
**in that** the predefined movement path consists of track sections (111) arranged parallel to one another and is carried out for an individual segment (61a to 64a; 61b to 64b) with a property class (A) which has a basic geometric shape, and in that the random movement path is **characterized by** rectilinear track sections (116) which are connected by turning points produced with a random angle at the boundaries (117) of the individual segment (61a to 64a; 61b to 64b), wherein the random movement path is carried out for an individual segment (61a to 64a; 61b to 64b) with a property class (B) which can be treated most effectively by means of its random strategy.

6. Method according to one of Claims 1 to 5,
**characterized**
**in that** preference is given to that segmentation which generates larger individual areas of the individual segments (61a to 64a; 61b to 64b).

7. Method according to one of Claims 1 to 6,
**characterized**
**in that** the number of individual segments (61a to 64a; 61b to 64b) for the segmentation is selected on the basis of the size of the area (100) such that a minimum size for an individual segment (61a to 64a; 61b to 64b) is established.

8. Use of a method according to one of Claims 1 to 7 in an autonomously moving lawnmower (10).

## Revendications

1. Procédé de traitement d'une surface (100) au moyen d'un véhicule robotisé (10), le véhicule robotisé (10) possédant une commande (15) dans laquelle sont enregistrées des données concernant le contour de la surface (100) à traiter, des moyens de localisation (20) étant présents, lesquels déterminent la position du véhicule robotisé (10), notamment en référence à la surface (100) à traiter, et le procédé comprenant les étapes suivantes :
- division de la surface (100) à traiter en segments individuels (61a à 64a ; 61b à 64b) au moyen d'un algorithme de la commande (15), plusieurs segmentations ayant des nombres différents de segments individuels (61a à 64a ; 61b à 64b) étant générées initialement,
- classification de chaque segment individuel (61a à 64a ; 61b à 64b) en une parmi deux classes de propriétés (A, B), les classes de propriétés (A, B) se différenciant au niveau de la simplicité ou de l'efficacité du traitement,
- totalisation des classes de propriétés (A, B) des segments individuels (61a à 64a ; 61b à 64b) pour chaque segmentation par la commande (15),
- poursuite d'une stratégie de traitement qui possède un plus grand nombre de segments individuels (61a à 64a ; 61b à 64b) ayant une classe de propriétés (A, B) qui permet un traitement plus simple ou plus efficace,
- déplacement des segments individuels (61a à 64a ; 61b à 64b) et traitement de ceux-ci, chaque segment individuel (61a à 64a ; 61b à 64b) étant traité avec une stratégie de traitement correspondant à sa classe de propriétés (A, B).

2. Procédé selon la revendication 1, **caractérisé en ce que** les données concernant la surface (100) à traiter sont déterminées en faisant circuler le véhicule robotisé (10) le long d'une limite extérieure (101) de la surface (100) à traiter.

3. Procédé selon la revendication 1, **caractérisé en ce que** les résultats des traitements précédents ou pendant un traitement actuel sont utilisés lors de la division en segments individuels (61a à 64a ; 61b à 64b).

4. Procédé selon l'une des revendications 1 à 3, **caractérisé en ce que** la stratégie de traitement des segments individuels (61a à 64a ; 61b à 64b) consiste à parcourir une course de déplacement prédéfinie ou une course de déplacement à motivation aléatoire ou heuristique.

5. Procédé selon la revendication 4, **caractérisé en ce que** la course de déplacement prédéfinie se compose de portions de parcours (111) disposées en parallèle et est exécutée dans le cas d'un segment individuel (61a à 64a ; 61b à 64b) ayant une classe de propriétés (A), qui présente une forme géométrique de base, et **en ce que** la course de déplacement aléatoire est **caractérisée par** des portions de parcours (116) rectilignes qui sont reliées par des tournants aux angles aléatoires générés aux limites (117) des segments individuels (61a à 64a ; 61b à 64b), la course de déplacement aléatoire étant exécutée dans le cas d'un segment individuel (61a à 64a ; 61b à 64b) ayant une classe de propriétés (B) qui peut être traité le plus efficacement au moyen de sa stratégie aléatoire.

6. Procédé selon l'une des revendications 1 à 5, **caractérisé en ce que** la segmentation qui est préférée est celle qui génère les surfaces individuelles les plus grandes des segments individuels (61a à 64a ; 61b à 64b).

7. Procédé selon l'une des revendications 1 à 6, **caractérisé en ce que** le nombre de segments individuels (61a à 64a ; 61b à 64b) pour la segmentation est choisi en fonction de la taille de la surface (100) de sorte qu'une taille minimale soit établie pour un segment individuel (61a à 64a ; 61b à 64b).

8. Utilisation d'un procédé selon l'une des revendications 1 à 7 dans une tondeuse à gazon (10) à déplacement autonome.
